# EUROPÄISCHE PATENTSCHRIFT

(11) **EP 0 361 111 B1**
(45) Veröffentlichungstag und Bekanntmachung des Hinweises auf die Patenterteilung: **20.04.1994**
(21) Anmeldenummer: 89115840.4
(22) Anmeldetag: 28.08.1989
(51) Int. Cl.: G02B 6/36

(54) **Lichtwellenleiter-Steckverbindung**
Plug-in connection for light guides
Connexion embrochable pour des guides d'ondes lumineuses

(30) Priorität: 29.09.1988 DE 8812341 U; 20.01.1989 DE 8900623 U
(43) Veröffentlichungstag der Anmeldung: 04.04.1990
(73) Patentinhaber: SIEMENS AKTIENGESELLSCHAFT, 80333 München (DE)
(72) Erfinder: Krausse, Peter, Dipl.-Ing., D-8011 Aschheim (DE); Hirseland, Klaus, Dipl.-Ing.(FH), D-8034 Germering (DE)

(56) Entgegenhaltungen:
- EP-A- 0 097 575
- EP-A- 0 164 531
- EP-A- 0 205 984
- WO-A-87/04262
- US-A- 4 832 435
- PATENT ABSTRACTS OF JAPAN, Band 11, Nr. 366 (P-641), 28 November 1987 & JP A 62138805
- PATENT ABSTRACTS OF JAPAN, 10, Nr. 52 (P-432), 28 Februar 1986 & JP A 60196706

## Beschreibung

Die Erfindung bezieht sich auf eine Lichtwellenleiter-Steckverbindung mit zwei Steckern, bei denen das Ende der Lichtwellenleiter-Faser jeweils in einer Kapillare eines Steckerstiftes fixiert ist, dessen Frontseite plan mit der Lichtwellenleiter-Faser endet, wobei eine sowohl für den Einbau z.B. in eine Gestell- oder Einschubwand als auch als Direktverbindung verwendbare Schutz- und Befestigungshülse vorgesehen ist, die eine Führungsbuchse für die Aufnahme der Steckerstifte aufweist und die am Außenumfang mit einem Gewinde zur Befestigung der mit Überwurfmuttern versehenen Stecker ausgestattet ist.

Eine derartige Lichtwellenleiter-Steckverbindung ist durch die EPA 0 164 531 bekannt. Zur Bildung einer quasi-neutralen Steckverbindung ist dabei eine aus Hartmetall bestehende Hülse als Führungsbuchse vorgesehen, deren genau bearbeitete Innenflächen den Außendurchmessern der von beiden Seiten in die Hülse einsteckbaren Stecker entsprechen.

Der Erfindung liegt die Aufgabe zugrunde, eine Anordnung anzugeben, die die gegenseitige Drehlage dieser beiden Stecker zueinander in bezug auf optimale Übertragungscharakteristik sichert.

Bei einer Lichtwellenleiter-Steckverbindung nach dem Oberbegriff wird dies gemäß dem Kennzeichen des Anspruchs 1 erreicht.

Vorteilhafte Weiterbildungen der Erfindung finden sich in den Unteransprüchen.

Nachstehend wird die Erfindung samt ihren Vorteilen anhand eines in den Figuren dargestellten Ausführungsbeispiels näher erläutert.
- Die Figur 1: zeigt den Stecker 2 mit der Einrichtung zur Drehlagenbestimmung.
- Die Figur 2: zeigt mögliche Einstellungen der Faser in Bezug auf die Drehlagensicherung.
- Die Figur 3: zeigt den Stecker samt der Buchse, hier eine Einbaubuchse zum Zusammenstecken zweier Stecker.
- Die Figur 4: zeigt einen Längsschnitt einer weiteren Ausführung der Drehmomentbegrenzung
- Die Figur 5: zeigt einen Querschnitt in der in Figur 4 gezeichneten Ebene.
- Die Figur 6: zeigt eine Draufsicht auf das mit Ratschen versehene Ende der Überwurfmutter.

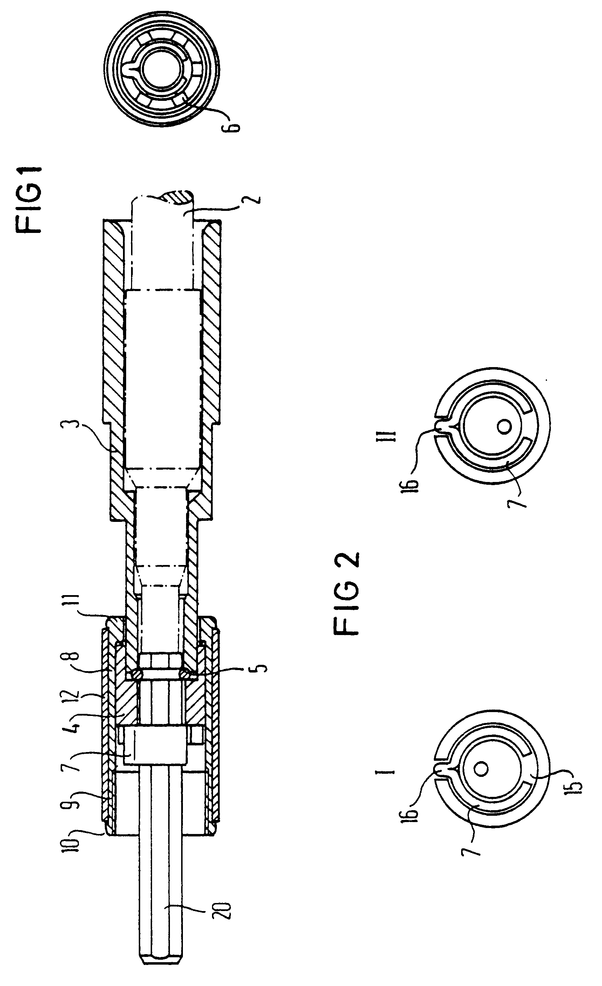

Über ein ankommendes Lichtwellenleiter-Kabel 2 ist ein Steckergehäuse 3 geschoben, aus dessen vorderem Ende der Stecker 1 herausragt. Dieser Stecker trägt im Zentrum die Lichtwellenleiter-Faser in einer Kapillare. Das Frontende ist mitsamt der Lichtwellenleiter-Faser plan geschliffen. Mittels einer Ringmutter 4 ist der Steckerstift 1 über einen Klemmring 5 lagensicher mit dem Steckergehäuse 3 verschraubt. Auf das vordere Ende des Steckerstiftes ist eine längsgeschlitzte Hülse 7 aufgeschoben, die diagonal gegenüber ihrem Schlitz 15 zu einer Falz 16 zusammengedrückt ist. Die Ringmutter 4 hat frontseitig Radialnuten 6 in eine von denen die Falz 16 in axialer Richtung eingreift. In der Figur 2 ist jeweils nur eine der Radialnuten 6 eingezeichnet. Die längsgeschlitzte Hülse 7 ist in diejenige der Nuten 6 eingelegt, in der die größte Exzentrizität des Faserkerns 13 gegenüber dem Mittelpunkt 14 von derjenigen Durchmesserlinie entspricht, auf der die Falz 16 liegt. Dies kann auch nach Prinzip II so geschehen, daß der Faserkern 13 umgekehrt zum Mittelpunkt 14 auf der anderen Seite gegenüber Prinzip I liegt. Es muß bei Aufeinandertreffen zweier Stifte nur gewährleistet sein, daß entweder nach Prinzip I oder nach Prinzip II eingestellt ist. Beide Möglichkeiten führen zum selben Ergebnis, nämlich einer Verringerung der Dämpfung einer Steckverbindung durch Reduzierung der Exzentrizität der beiden gekoppelten Fasern gegeneinander. Man muß sich jedoch auf eine der beiden Möglichkeiten festlegen.

Durch Justieren der Drehsicherung auf ein Dämpfungsminimum gegen einen Musterstecker mit definierter Exzentrizität in bekannter Richtung sowie weitgehend idealen geometrischen Formen und Abmessungen, lassen sich die Einflüsse aller geometrischen Toleranzen (Exzentrizität, Schielwinkel, Stirnflächenwinkel usw.) minimieren.

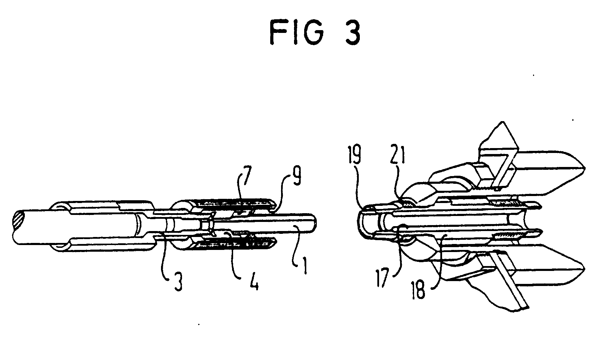

Die Figur 3 zeigt die an sich bekannte Zentrierhülse 17, die hier im Beispiel von einer Einschubhalterung 18 umgeben ist. Da an beiden Enden der Halterung 18 Längsschlitze 19 für die Falze 16 zweier über die Hülse zusammenzuführende Stecker 1 vorgesehen sind, ist die gegenseitige Lagezuordnung der Stekker gegeben. Der von rechts in die Hülse 17 einzusteckende gleich oder ähnlich ausgebildete Gegenstecker ist nicht mehr gezeichnet, er besteht aber im Prinzip aus dem gleichen Stekker gemäß Figur 1.

Um den Stecker 1 mit der Hülse 17 und 18 axial arretierbar zu befestigen, ist eine Überwurfmutter 8 vorgesehen, deren Innengewinde 9 auf das Außengewinde 21 der Hülse 18 aufschraubbar ist. Um u.a. hierbei die Dreheinstellung nicht zu verändern, ist auf dieser Überwurfmutter eine Drehmomentenbegrenzung vorgesehen. Dabei wird eine federnde längsgeschlitzte Hülse 12 über einen der Bunde 10 oder 11 der Überwurfmutter übergesteckt. Dieses außen gerändelte Rohr 12 hat natürlich einen geringfügig kleineren Innendurchmesser als dem Außendurchmesser der Überwurfmutter 8 entspricht. Die Bunde begrenzen das Axialspiel dieser Hülse 12 und durch das Reibungsmoment zwischen den Teilen 12 und 8 wird eine Rutschkupplung geschaffen, so daß das Anzugsmoment des Gewindes 9 begrenzt wird. Auf diese Weise entsteht eine elektrisch und mechanisch optimal wirksame Lichtwellenleiter-Steckvorrichtung.

In der Figur 1 ist außerdem eine geringfügige Anfasung 20 des Steckerstiftes 1 dargestellt, die beim Zusammenstecken zweier solcher Stecker über die Verbindungshülse 17 das Entweichen von Luft ermöglicht, da diese Teile mit enger Passung gegenseitig bearbeitet sind.

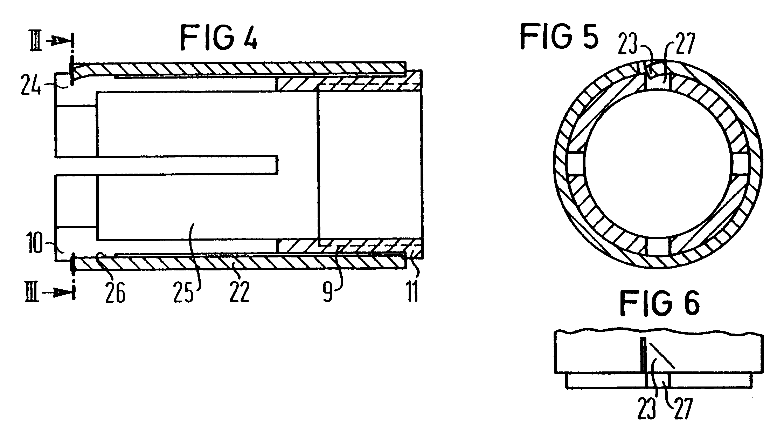

Gemäß den Figuren 4 bis 6 ist nach einer weiteren besonders vorteilhaften Ausführung der Rutschkupplung die Überwurfmutter im Bereich des Kragens 24 auf einen Abschnitt 25 umfangsseitig mehrfach längsgeschlitzt. Die Schlitze 27 sorgen für eine gefiederte, das heißt in Radialrichtung federnde Ausführung der Überwurfmutter in diesem Abschnitt. Auf ein kurzes Stück 26 in diesem Endbereich der Überwurfmutter hat diese einen geringfügig größeren Durchmesser als dem Innendurchmesser der Hülse 22 entspricht. Dadurch entsteht im Zusammenhang mit der Fiederung eine Rutschkupplung zur Begrenzung des Drehmoments der Mutter. Da die Begrenzung des Drehmoments eigentlich nur in Anzugsrichtung erforderlich ist, wird die Hülse an diesem Ende an einer Stelle am Umfang auf ein kurzes Stück längsgeschlitzt, und der Abschnitt 23, der in Anzugsrichtung für die Mutter nach dem Schlitz liegt, zungenförmig nach innen eingedrückt. Dadurch wird ein Sperrklinkeneffekt erzeugt, da dieser Abschnitt über die Segmente der Fiederung in Anzugsrichtung hinweggleitet, bis das erforderliche Anzugsdrehmoment erreicht ist. In Gegenrichtung springt jedoch, wie durch Figur 5 gezeigt, der Abschnitt 23 in einen der Schlitze 27, so daß nach Art einer Sperrklinke beim Lösen der Überwurfmutter das volle Drehmoment von der Hülse 22 auf die Überwurfmutter 8 übertragen wird. Dadurch wird ein sicheres Lösen des Gewindes vom entsprechenden Gegengewinde gewährleistet.

Besonders vorteilhaft ist dabei, daß die Hülse 22 starr ist, so daß durch festes Anfassen dieses Teils eine Erhöhung des Drehmoments nicht mehr möglich ist. Dabei signalisiert in vorteilhafter Weise das Ratschen beim Anzug der Überwurfmutter, daß das erforderliche Anzugsdrehmoment erreicht wird.

Die Hülse 22 wird bei der Montage über den gefiederten Bund 10 der Überwurfmutter geschoben bis zur Anlage an den gegenüberliegenden Bund 11.

## Patentansprüche

1. Lichtwellenleiter-Steckverbindung mit zwei Steckern, bei denen das Ende der Lichtwellenleiter-Faser jeweils in einer Kapillare eines Steckerstiftes fixiert ist, dessen Frontseite plan mit der Lichtwellenleiter-Faser endet, wobei eine sowohl für den Einbau z.B. in eine Gestell- oder Einschubwand als auch Direktverbindung verwendbare Schutz- und Befestigungshülse vorgesehen ist, die eine Führungsbuchse für die Aufnahme der Steckerstifte aufweist und die am Außenumfang mit einem Gewinde zur Befestigung der mit Überwurfmuttern (8) versehenen Stecker ausgestattet ist, **dadurch gekennzeichnet,** daß eine den Steckerstift umhüllende Ringmutter (4) in Richtung zur Frontseite des Steckers umfangsseitig mehrere Radialnuten (6) hat, und daß auf den Stecker (1) eine längsgeschlitzte Hülse (7) aufgeschoben ist, die diagonal gegenüber dem Schlitz (15) zu einem Falz (16) zusammengedrückt ist, der ausgerichtet in einer Linie mit dem exzentrischen Faserkern und der Mittelachse des Steckers in eine der Radialnuten (6) eingreift.

2. Lichtwellenleiter-Steckverbindung nach Anspruch 1, **dadurch gekennzeichnet**, daß bei zwei über ein Zentrierröhrchen (17) frontseitig aufeinander gedrückten Steckern (1) der Falz (16) bei beiden Steckern auf die gleiche Anordnung des exzentrischen Faserkerns und der Mittelachse in beiden Steckern eingestellt wird.

3. Lichtwellenleiter-Steckverbindung nach einem der vorhergehenden Ansprüche, **dadurch gekennzeichnet**, daß eine über dem frontseitigen Ende des Steckers (1) angeordnete Überwurfmutter (8) zur Arretierung des Steckers mit dem Gegenstecker der Lichtwellenleiter-Steckverbindung über ein Innengewinde (9) in dieser Überwurfmutter (8) verbunden ist, wobei eine am Ende der Überwurfmutter aufgezogene längsgeschlitzte Hülse (12) reibend auf der Überwurfmutter (8) sitzt.

4. Lichtwellenleiter-Steckverbindung nach dem Anspruch 3, **dadurch gekennzeichnet,** daß der dem Gewindeteil (9) der Überwurfmutter (8) in Axialrichtung gegenüberliegende, mit Kragen (24) versehene Abschnitt (25) der auf der Überwurfmutter (8) sitzenden längsgeschlitzten Hülse (22) am Umfang mehrfach längsgeschlitzt ist und am Ende auf ein kurzes Stück (26) mit etwas größerem Durchmesser als dem Innendurchmesser der Hülse (22) dort entspricht, versehen ist, so daß dort das für den Anzug der Überwurfmutter erforderliche Drehmoment durch Reibung der federnden Enden (26) der Überwurfmutter (8) mit der Hülse (22) entsteht.

5. Lichtwellenleiter-Steckverbindung nach Anspruch 4, **dadurch gekennzeichnet,** daß die Hülse (22) in dem Bereich, an dem die Reibung stattfindet, an ihrem axialen Ende umfangsseitig etwas eingeschlitzt und ein in Eindrückrichtung der Überwurfmutter liegendes Stück (23) zungenförmig nach innen eingedrückt ist, so daß dort eine Sperrklinke entsteht, die beim Lösen der Überwurfmutter das volle Drehmoment von der Hülse (22) auf die Überwurfmutter (8) überträgt.

## Claims

1. Demountable connection for optical waveguides, having two plugs and in which the end of the optical waveguide fibre is fixed in each case in a capillary of a plug pin whose front side terminates evenly with the optical waveguide fibre, provision being made for a protective and fastening sleeve which can be used both for installation, for example in a rack wall or unit wall, and for direct connection, which has a guide socket for accommodating the plug pins, and which is equipped on the outer circumference with a thread for fastening the plugs provided with cap nuts (8), characterized in that a ring nut (4) enveloping the plug pin has on the circumferential side a plurality of radial grooves (6) in a direction towards the front side of the plug, and in that there is pushed onto the plug (1) a longitudinally slotted sleeve (7) which is diagonally compressed relative to the slot (15) to form a flange (16) which engages in one of the radial grooves (6) in a manner aligned with the eccentric fibre core and the central axis of the plug.

2. Demountable connection for optical waveguides according to Claim 1, characterized in that in the case of two plugs (1) pressed onto one another at the front side via a centring tube (17), in the case of both plugs the flange (16) is adjusted to the same arrangement of the eccentric fibre core and of the central axis in both plugs.

3. Demountable connection for optical waveguides according to one of the preceding claims, characterized in that for the purpose of locking the plug, a cap nut (8) arranged over the front-side end of the plug (1) is connected with the mating connector of the demountable connection for optical waveguides via an internal thread (9) in this cap nut (8), a longitudinally slotted sleeve (12) pulled on at the end of the cap nut being seated frictionally on the cap nut (8).

4. Demountable connection for optical waveguides according to Claim 3, characterized in that the section (25), opposite the threaded part (9) of the cap nut (8) in the axial direction and provided with a collar (24), of the longitudinally slotted sleeve (22) seated on the cap nut (8) is longitudinally slotted in multiple fashion on the circumference and is provided at the end over a short piece (26) with a somewhat larger diameter than the inside diameter of the sleeve (22), with the result that the torque required for tightening the cap nut is produced there by friction between the resilient ends (26) of the cap nut (8) and the sleeve (22).

5. Demountable connection for optical waveguides according to Claim 4, characterized in that in the region at which the friction occurs, the sleeve (22) is somewhat incised on the circumferential side at its axial end and a piece (23) situated in the pressing-in direction of the cap nut is pressed inwards in the shape of a tongue, producing a catch there which upon loosening of the cap nut transmits the full torque from the sleeve (22) onto the cap nut (8).

## Revendications

1. Dispositif de liaison à enfichage pour guide d'ondes lumineuses, comportant deux connecteurs, dans lesquels l'extrémité de la fibre d'un guide d'ondes lumineuses est fixée dans un capillaire d'une fiche mâle, dont la face frontale se termine dans un plan conjointement avec la fibre du guide d'ondes lumineuses, et dans lequel il est prévu une douille de protection et de fixation qui est utilisable aussi bien pour le montage par exemple dans une paroi d'une baie ou d'un tiroir que pour l'établissement d'une liaison directe, qui a une douille de guidage pour loger les fiches mâles et qui est munie, sur son pourtour extérieur, d'un filetage permettant la fixation des connecteurs équipés d'écrous-raccords (8), caractérisé par le fait qu'un écrou annulaire (4), qui entoure le connecteur mâle, a sur son pourtour, plusieurs rainures radiales (6) en direction de la face avant du connecteur, et que sur la fiche (1) est emmanchée une douille (7) fendue longitudinalement, qui est comprimée en diagonale par rapport à la fente (15) pour former un pli (16), lequel, en une position alignée suivant une ligne avec le noyau excentré de la fibre et l'axe médian de la fiche, pénètre dans l'une des rainure radiales (6).

2. Dispositif de liaison à enfichage pour guide d'ondes lumineuses suivant la revendication 1, caractérisé par le fait que, dans le cas de deux connecteurs (1) repoussés frontalement l'un contre l'autre au-dessus d'un petit tube de centrage (17), le pli (16) est réglé, dans les deux connecteurs, sur la même position du noyau excentré de la fibre et de l'axe médian des deux connecteurs.

3. Dispositif de liaison à enfichage pour guide d'ondes lumineuses suivant l'une des revendications précédentes, caractérisé par le fait qu'un écrou-raccord (8) disposé au-dessus de l'extrémité avant du connecteur (1) est relié pour le blocage du connecteur au connecteur antagoniste du dispositif de connexion à enfichage pour guide d'ondes lumineuses, par l'intermédiaire d'un taraudage (9) ménagé dans cet écrou-raccord (8), une douille (12) fendue longitudinalement, qui est emmanchée sur l'extrémité de l'écrou-raccord (8), prenant appui avec frottement sur ce dernier.

4. Dispositif de liaison à enfichage pour guide d'ondes lumineuses suivant la revendication 3, caractérisé par le fait que la section (25), qui est située en vis-à-vis de la partie taraudée (9) de l'écrou-raccord (8) dans la direction axiale et qui est pourvue d'un collet (24), de la douille (22) fendue longitudinalement et en appui sur l'écrou-raccord (8), est fendue longitudinalement de façon multiple sur sa périphérie, et a à son extrémité, sur une courte longueur (26), un diamètre légèrement supérieur à ce qui correspond au diamètre intérieur de la douille (22) en cet endroit, de sorte qu'en cet endroit le couple nécessaire pour le serrage de l'écrou-raccord est créé par frottement des extrémités élastiques (26) de l'écrou-raccord (8) avec la douille (22).

5. Dispositif de liaison à enfichage pour guide d'ondes lumineuses suivant la revendication 4, caractérisé par le fait que la douille (22) est légèrement fendue à sa périphérie, sur son extrémité axiale, dans la zone dans laquelle intervient le frottement et qu'un élément (23) qui est situé dans la direction d'enfoncement de l'écrou-raccord est repoussé, sous la forme d'une languette, vers l'intérieur de sorte qu'en cet endroit se crée un cliquet de blocage qui, lors du desserrage de l'écrou-raccord, transmet le couple complet de la douille (22) à l'écrou-raccord (8).
